# EUROPÄISCHE PATENTSCHRIFT

(11) **EP 0 651 529 B1**
(45) Veröffentlichungstag und Bekanntmachung des Hinweises auf die Patenterteilung: **23.06.2004**
(21) Anmeldenummer: 93117602.8
(22) Anmeldetag: 29.10.1993
(51) Int. Cl.: H04J 14/02

(54) **Optisches, transparentes Ringnetz mit Auskoppelung eines Signales einer Wellenlänge in einem oder mehreren Ringknoten**
Optical transparent ring network with dropping of one wavelength signal in one or more ring nodes
Réseau en anneau optique transparent avec dérivation d'un signal d'une longueur d'onde dans un ou plusieurs noeuds de l'anneau

(43) Veröffentlichungstag der Anmeldung: 03.05.1995
(73) Patentinhaber: SIEMENS AKTIENGESELLSCHAFT, 80333 München (DE)
(72) Erfinder: Huber, Manfred N, Dr.-Ing., D-82166 Gräfelfing (DE); Osborne, Robert Dr.-Ing., D-81371 München (DE)

(56) Entgegenhaltungen:
- EP-A- 0 544 216
- ICC93, Nr.2, 23. Mai 1993, GENEVA, CH Seiten 1245 - 1251, XP371271 A.F. ELREFAIE 'Multiwavelength Survivable Ring Network Architectures'
- ICC92, Bd.3, 14. Juni 1992, CHICAGO, US Seiten 1173 - 1179, XP337910 STUART S. WAGNER ET AL. 'Multiwavelength Ring Networks for Switch Consolidation and Interconnection'
- INFOCOM90, März 690, SAN FRANCISCO, US Seiten 1030 - 1037, XP163317 K. YAMAGUCHI ET AL. 'A Broadband Access Network Based on Optical Signal Processing : The Photonic Highway'

## Beschreibung

Vor dem Hintergrund eines ständig zunehmenden Bedarfs an Übertragungskapazität in Kommunikationsnetzen bieten optische, transparente Ringnetze mit Wellenlängenmultiplex, bei denen die Signalübertragung auch in den als add-/drop-Multiplexern ausgebildeten Ringknoten rein optisch erfolgt, einen erfolgversprechenden Ansatz.

Die Erfindung betrifft ein optisches Ringnetz mit einer Mehrzahl von Ringknoten, bei dem
- jeweils benachbarte Ringknoten (RK) über eine optische Signale mit unterschiedlichen Wellenlängen führende Glasfaserleitung (GL) für eine Übertragungsrichtung verbunden sind,
- die Ringknoten mit jeweils ein optisches Signal mit einer einzigen Wellenlänge dem Ringnetz zuführenden Wellenleitern (RWLZ) bzw. von dem Ringnetz weiterleitenden Wellenleitern (RWLW) verbunden sind,
- jeder Ringknoten einen Demultiplexer (DEMUX) aufweist, der eingangsseitig mit der optische Signale heranführenden Glasfaserleitung und ausgangsseitig mit jeweils ein optisches Signal einer einzigen Wellenlänge führenden Wellenleitern (TWL) verbunden ist,
- jeder Ringknoten einen Multiplexer (MUX) aufweist, der ausgangsseitig mit der optische Signale weiterleitenden Glasfaserleitung und eingangsseitig mit jeweils ein optisches Signal einer einzigen Wellenlänge führenden Wellenleitern verbunden ist.

Aus OFC/IOOC, 21. bis 26.02.1993, Technical Digest, Vol. 4, Conference Edition, Seiten 44 bis 46, "Multiwavelength fiber-amplifier cascades in undirectional interoffice ring networks", ist ein optisches, transparentes Ringnetz mit Wellenlängenmultiplex und unidirektionaler Übertragungsrichtung bekannt, bei dem zwischen einem zentralen Ringknoten und einer Mehrzahl von Ringknoten über ringknotenindividuelle Wellenlängen bidirektionale Übertragungswege gegeben sind. Bei diesem Ringnetz ist eine Verbindungsmöglichkeit von einem Ringknoten zu einer Mehrzahl von Ringknoten (point-to-multipoint, multicast) dadurch gegeben, daß nur von dem zentralen Ringknoten aus den gewünschten Ringknoten ein Signal über die zugehörigen Wellenlängen zugeführt wird. Dabei ist zum einen die Aussendung eines Signals an mehrere Ringknoten auf den zentralen Ringknoten beschränkt und zum anderen kann einem Ringknoten, der ein multicast-Signal empfängt, kein anderes Signal mit einer anderen Wellenlänge zugeführt werden. Ferner offenbart die Patentschrift EP-A-0 544 216 ein optisches Ringnetz mit Auskoppelung eines Signals einer Wellenlänge in mehreren Ringknoten.

Der Erfindung liegt das Problem zugrunde, ein optisches, transparentes Ringnetz mit mehr Flexibilität in Bezug auf die Einkoppelung, Durchschaltung und Auskoppelung von Signalen in den Ringknoten anzugeben.

Das Problem wird bei einem eingangs umrissenen Ringnetz durch die im Kennzeichnenden Teil des Anspruchs 1 angegebenen Merkmale gelöst.

Die Erfindung bringt gemäß einer Ausführungsform eine Auskoppelbarkeit eines Signales mit einer Wellenlänge aus beliebigen Ringknoten des Ringnetzes mit sich.

Gemäß der Erfindung ist ein mit dem Multiplexer verbundener Wellenleiter über eine Schalteinrichtung wahlweise mit dem Demultiplexer oder mit einem ein optisches Signal dem Ringnetz zuführenden Wellenleiter verbindbar. Diese Maßnahme bringt eine Wahlfreiheit eines Ringknotens zur Einkoppelung eines Signales in das Ringnetz mit sich.

In weiterer Ausgestaltung ist ein Wellenleiter nur mit dem Demultiplexer und dem Multiplexer verbunden. Diese Maßnahme bringt neben der wahlfreien Durchschaltung oder Auskoppelung bzw. Einkoppelbarkeit von einzelnen Signalen eine feste Durchschaltung eines Signales mit sich.

Gemäß weiteren Weiterbildungen der Erfindung ist der Demultiplexer ausgangsseitig mit einem ein Signal mit einer einzigen Wellenlänge von dem Ringnetz weiterleitenden Wellenleiter bzw. der Multiplexer eingangsseitig mit einem ein Signal mit einer einzigen Wellenlänge dem Ringnetz zuführenden Wellenleiter verbunden. Diese Maßnahmen bringen eine feste Auskoppelung bzw. eine feste Einkoppelung eines jeweiligen Signales mit sich.

Gemäß einer Weiterbildung der Erfindung sind der Demultiplexer und der Multiplexer jeweils mit einem ein Signal mit einer besonderenen Wellenlänge führenden Wellenleiter verbunden. Diese Maßnahme bringt eine feste Aus- und Einkoppelung eines Signales mit einer besonderen Wellenlänge z.B. zur Steuerung eines Ringknotens mit sich.

Die Verfahren zum Betrieb des Ringnetzes betreffenden Weiterbildungen zeigen ein vorteilhaftes Nebeneinander von Multicast-Verbindungen und Verbindungen zwischen einzelnen Ringknoten.

Die Erfindung wird nun als Ausführungsbeispiel in einem zum Verständnis erforderlichen Umfang näher beschrieben. Dabei zeigen:
- FIG 1: eine prinzipielle Darstellung eines unidirektionalen, transparenten, optischen Ringnetzes mit Wellenlängenmultiplex,
- FIG 2: eine prinzipielle Darstellung eines Ringknotens für Multicast-Betrieb des Ringnetzes,
- FIG 3: eine prinzipielle Darstellung eines Ringnetzes mit einem Arbeitsring und einem Überwachungsring,
- FIG 4: eine prinzipielle Darstellung eines Ringknotens eines Ringnetzes mit Arbeitsring und Überwachungsring, wobei ringspezifische Module redundant ausgebildet sind.

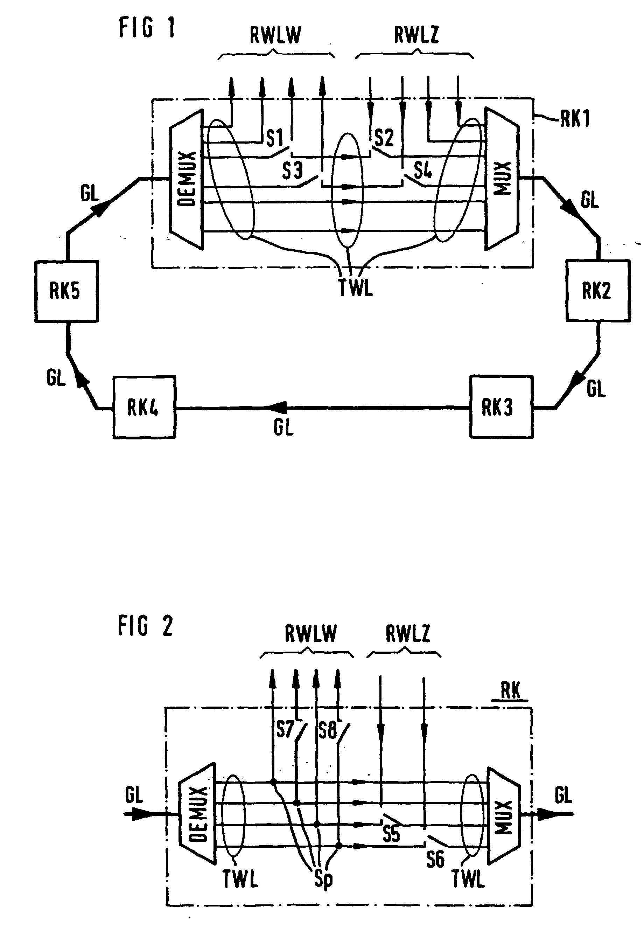

FIG 1 zeigt ein mit einer Mehrzahl von Ringknoten RK gebildetes, optisch transparentes Ringnetz, bei dem benachbarte Ringknoten über jeweils eine optische Signale mit unterschiedlichen Wellenlängen führende Glasfaserleitung GL im Ring verbunden sind. Der Ringknoten RK1 läßt nähere Einzelheiten einer besonderen Ausgestaltung eines Ringknotens erkennen. Das optische Signale heranführende Ende der Glasfaserleitung ist in dem Ringknoten mit einem herkömmlichen Demultiplexer DEMUX verbunden, der ihm eingangsseitig zugeführte, optische Signale nach Maßgabe ihrer Wellenlänge einzelnen, mit dem Demultiplexer ausgangsseitig verbundenen und als Tangential-Wellenleiter TWL bezeichneten Wellenleitern zuführt.

Die Tangential-Wellenleiter, die im wesentlichen in tangentialer Richtung zum Ringnetz verlaufen, führen also jeweils ein optisches Signal mit einer individuellen Wellenlänge. Die beiden mit dem Demultiplexer verbundenen und in der Figur ganz oben dargestellten Tangential-Wellenleiter sind als jeweils ein optisches Signal mit einer einzigen Wellenlänge im wesentlichen in radialer Richtung vom Ringnetz weiterleitende Radial-Wellenleiter RWLW weitergeführt. Die beiden mit dem Demultiplexer verbundenen und in der FIG 1 in der Mitte dargestellten Tangential-Wellenleiter sind wahlweise über eine Schalteinrichtung S1 bzw. über eine Schalteinrichtung S3 mit jeweils einem Radial-Wellenleiter oder über die Schalteinrichtung S1 und die Schalteinrichtung S2 bzw. über die Schalteinrichtung S3 und die Schalteinrichtung S4 mit einem herkömmlichen Multiplexer MUX verbindbar. Der Multiplexer ist eingangsseitig mit einer Mehrzahl von Tangential-Wellenleitern und ausgangsseitig mit einer Glasfaserleitung verbunden und führt die jeweiligen auf den einzelnen Tangential-Wellenleitern herangeführten Signale zu einem auf der Glasfaserleitung geführten Gesamtsignal zusammen. Die beiden mit dem Demultiplexer verbundenen und in der FIG 1 unten dargestellten Tangential-Wellenleiter sind fest mit dem Multiplexer verbunden. Über zwei jeweils ein optisches Signal mit einer einzigen Wellenlänge dem Ringnetz in radialer Richtung zuführenden Radial-Wellenleiter RWLZ können via die Schalteinrichtung S2 bzw. über die Schalteinrichtung S4 dem Multiplexer diese Signale zugeführt werden. Ist der Demultiplexer über die Schalteinrichtung S1 und die Schalteinrichtung S2 bzw. über die Schalteinrichtung S3 und die Schalteinrichtung S4 verbunden, so werden die auf den betreffenden Tangential-Wellenleitern leitern geführten optischen Signale mit der spezifischen Wellenlänge durch den Ringknoten durchgeschaltet und verbleiben in dem Ringnetz. Ebenso werden auch die auf den in FIG 1 ganz unten dargestellten Tangential-Wellenleitern geführten optischen Signale durchgeschaltet. Für den Fall, daß der Demultiplexer über die Schalteinrichtung S1 bzw. über die Schalteinrichtung S3 mit dem zugehörigen, Signale weiterleitenden Radial-Wellenleiter verbunden ist, wird das in dem zugehörigen Tangential-Wellenleiter geführte optische Signal von dem Ringnetz weitergeleitet. Die Wellenlänge eines Signals, das in einem Ringknoten ausgekoppelt wurde, kann für die Einkoppelung eines anderen optischen Signals mit dieser Wellenlänge in diesem Ringknoten benutzt werden. Eine Nutzung der Wellenlänge eines ausgekoppelten Signals in dem selben Ringknoten ist nicht zwingend. Eine erneute Nutzung der Wellenlänge eines ausgekoppelten Signals kann in einem anderen Ringknoten erfolgen.

FIG 2 zeigt eine alternative Ausgestaltung eines Ringknotens. Einem Demultiplexer DEMUX werden über eine Glasfaserleitung GL optische Signale mit unterschiedlichen Wellenlängen zugeführt. Der Demultiplexer splittet die optischen Signale nach Maßgabe ihrer Wellenlänge auf optische Signale einer einzigen Wellenlänge führende Tangential-Wellenleiter auf. Die beiden in FIG 2 oben dargestellten Tangential-Wellenleiter sind unmittelbar mit einem Multiplexer MUX verbunden und die beiden unten dargestellten Tangential-Wellenleiter sind über eine Schalteinrichtung S5 bzw. S6 mit dem Multiplexer verbindbar. Der Multiplexer leitet die einzelnen auf den Tangential-Wellenleitern herangeführten optischen Signale als Gesamtsignal auf eine Glasfaserleitung GL weiter. Die in der FIG 2 als oberster und als zweitunterster dargestellten Tangential-Wellenleiter sind über herkömmliche optische Verzweigungseinrichtungen Sp unmittelbar mit optische Signale von dem Ringnetz weiterleitenden Radial-Wellenleitern RWLW verbunden. Die in FIG 2 als zweitoberster und als unterster dargestellten Tangential-Wellenleiter sind jeweils über eine Verzweigungseinrichtung und eine Schalteinrichtung S7 bzw. S8 mit optische Signale von dem Ringnetz weiterleitenden Radial-Wellenleitern verbunden. Im übrigen sind die beiden in der FIG 2 als unterste dargestellte und mit dem Multiplexer verbundene Tangential-Wellenleiter über eine Schalteinrichtung S5 bzw. S6 mit zwei optische Signale dem Ringnetz zuführende Radial-Wellenleiter RWLZ verbindbar. Die einem Ringknoten nach FIG 2 über die Glasfaser zugeführten optischen Signale können sowohl aus dem Ringnetz ausgekoppelt als auch im Ringnetz an den nächstfolgenden Ringknoten weitergeleitet werden. Der Ringknoten nach FIG 2 bietet in einem Ringnetz die Möglichkeit, ein optisches Signal an einer Mehrzahl von Ringknoten auszukoppeln (Multicast-Betrieb). Der in FIG 2 als oberster dargestellte Tangential-Wellenleiter ist einerseits mit dem Multiplexer und andererseits mit einem ein optisches Signal weiterleitenden Radial-Wellenleiter fest verbunden. Der in FIG 2 als zweitoberster dargestellte Tangential-Wellenleiter ist einerseits mit dem Multiplexer fest verbunden und andererseits über eine Schalteinrichtung S7 mit einem ein optisches Signal weiterleitenden Radial-Wellenleiter verbindbar. Der in FIG 2 als zweitunterste dargestellte und mit dem Demultiplexer verbundene Tangential-Wellenleiter ist über die Schalteinrichtung S5 mit dem Multiplexer verbindbar. Der in FIG 2 als unterster dargestellte und mit dem Demultiplexer verbundene Tangential-Wellenleiter ist einerseits über die Schalteinrichtung S8 mit einem ein optisches Signal weiterleitenden Radial-Wellenleiter und über die Schalteinrichtung S6 mit dem Multiplexer verbindbar.

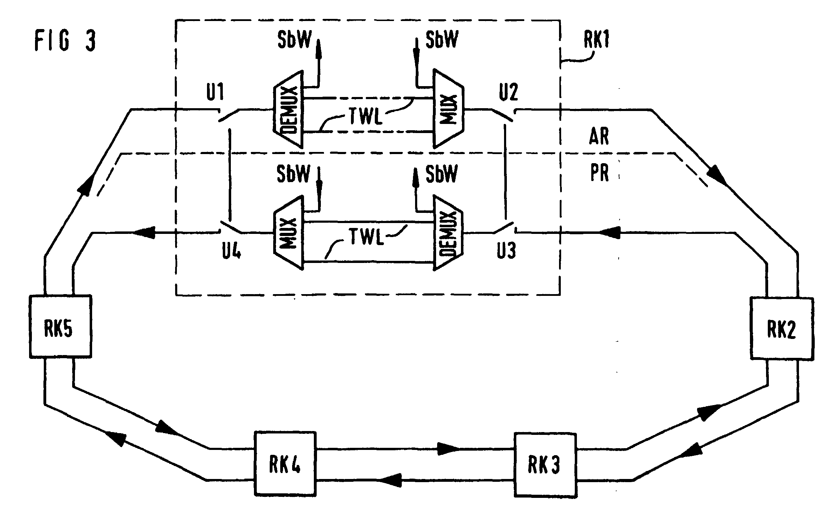

FIG 3 zeigt ein eine Mehrzahl von Ringknoten RK aufweisendes Ringnetz. Bei diesem Ringnetz ist dadurch, daß benachbarte Ringknoten zum einen jeweils über eine Glasfaserleitung mit der einen Übertragungsrichtung verbunden sind, ein Arbeitsring AR und zum andern jeweils über eine Glasfaserleitung mit der anderen Übertragungsrichtung verbunden sind, ein Überwachungsring PR (für: protection ring) gebildet. Der Ringknoten RK1 läßt nähere Einzelheiten erkennen. Eine optische Signale mit unterschiedlichen Wellenlängen heranführende Glasfaserleitung GL des Arbeitsringes ist über eine Umschalteinrichtung U1 mit einem Demultiplexer DEMUX verbindbar. Der Demultiplexer führt die einzelnen optischen Signale nach Maßgabe ihrer Wellenlänge jeweiligen Tangential-Wellenleitern TWL zu. In jedem Ringknoten koppelt ein mit dem Demultiplexer verbundener Wellenleiter ein optisches Signal mit einer besonderen Wellenlänge SbW aus. Das Signal mit der besonderen Wellenlänge führt Informationen, die das Ringnetz als solches betreffen. Diese Informationen können insbesondere durch Informationen für operation and maintenance gegeben sein. Die übrigen mit dem Demultiplexer verbundenen Tangential-Wellenleiter führen Nutzinformationen und sind, wie für FIG 1 oder FIG 2 beschrieben, mit einem Multiplexer bzw. mit optische Signale dem Ringnetz zuführenden Radial-Wellenleitern bzw. von dem Ringnetz weiterleitenden Radial-Wellenleitern verbunden. Mit dem Multiplexer ist ein Wellenleiter verbunden, der ein Signal mit der besonderen Wellenlänge SbW führt. Der Multiplexer führt die ihm zugeführten optischen Signale mit unterschiedlichen Wellenlängen zu einem Gesamtsignal zusammen und ist über eine Umschalteinrichtung U2 mit einer Glasfaserleitung des Arbeitsringes verbindbar. Eine optische Signale mit unterschiedlichen Wellenlängen heranführende Glasfaserleitung des Überwachungsringes ist über eine Umschalteinrichtung U3 mit einem Demultiplexer DEMUX verbindbar. Der Demultiplexer ist mit einem das optische Signal mit der besonderen Wellenlänge aus dem Ringnetz herausführenden Wellenleiter verbunden. Im übrigen ist der Demultiplexer über jeweils ein optisches Signal mit einer einzigen Wellenlänge führende Tangential-Wellenleiter TWL mit einem Multiplexer starr verbunden. Der Multiplexer ist eingangsseitig mit einem Wellenleiter verbunden, der ein optisches Signal mit der besonderen Wellenlänge führt. Der Multiplexer ist ausgangsseitig über eine Umschalteinrichtung U4 mit einer optische Signale mit unterschiedlichen Wellenlängen führende Glasfaserleitung GL verbindbar. In jedem Ringknoten wird also einerseits sowohl aus dem Arbeitsring als auch aus dem Überwachungsring ein optisches Signal mit der besonderen Wellenlänge aus dem Ringnetz herausgeführt (drop) und andererseits ein optisches Signal mit der besonderen Wellenlänge sowohl in den Arbeitsring als auch in den Übertragungsring eingefügt (add). In jedem Ringknoten wird im Arbeitsring wie auch im Überwachungsring das jeweilige optische Signal mit der besonderen Wellenlänge auf sein Vorhandensein hin überprüft. Im Falle einer Unterbrechung der Glasfaserleitungen zwischen zwei Ringknoten empfängt der eine Ringknoten auf dem Arbeitsring und der andere Ringknoten auf dem Überwachungsring kein jeweiliges optisches Signal mit der besonderen Wellenlänge. Ein Ringknoten, der von einem benachbarten Ringknoten kein optisches Signal mit der besonderen Wellenlänge empfängt, leitet selbsttätig auf der der Unterbrechungsstelle zugewandten Seite einen Ersatzschaltvorgang ein. Ein Ersatzschaltvorgang beinhaltet eine Verbindung des Multiplexers des einen Rings mit dem Demultiplexer des anderen Rings. Werden beispielsweise in FIG 3 die Glasfaserleitungen rechts von dem Ringknoten RK1 unterbrochen, so wird der Multiplexer des Arbeitsringes über die Umschalteinrichtungen U2 und U3 mit dem Demultiplexer des Überwachungsringes verbunden; dementsprechend werden im gegebenen Fall in dem in FIG 3 rechts außen dargestellten Ringknoten RK2 der Multipexer des Überwachungsringes über die Umschalteinrichtungen U4 und U1 mit dem Demultiplexer des Arbeitsringes verbunden. Im Falle der Unterbrechung von Glasfaserleitungen zwischen zwei Ringknoten werden also in den an die Unterbrechungsstelle angrenzenden Ringknoten auf der jeweiligen der Unterbrechungsstelle zugewandten Seite der Arbeitsring mit dem Überwachungsring verbunden, wodurch ein neuer arbeitsfähiger Ring gebildet ist.

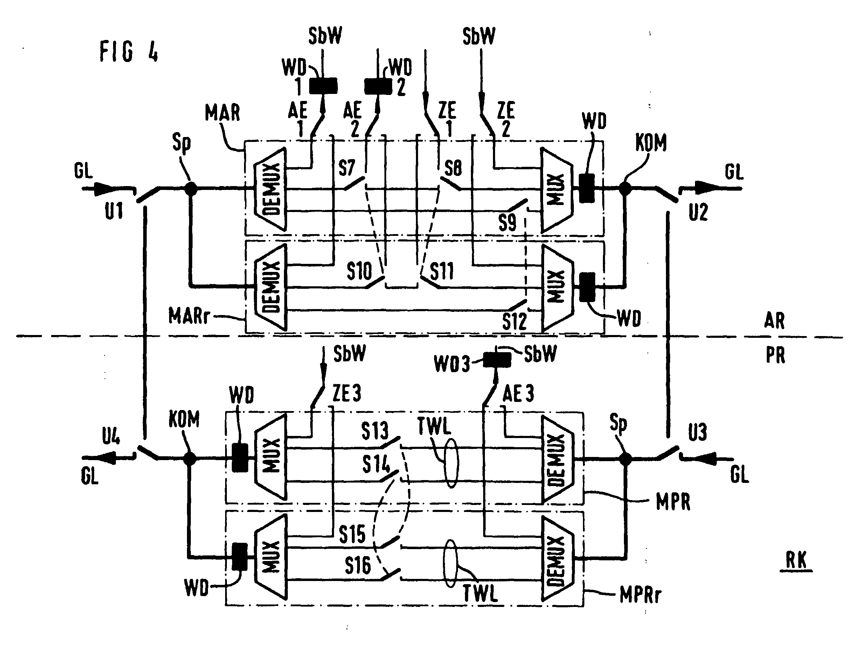

FIG 4 zeigt nähere Einzelheiten eines Ringknotens, bei dem die arbeitsring- bzw. überwachungsringspezifischen Einrichtungen mit zueinander redundanten Modulen gebildet sind. In der Figur sind oberhalb einer gestrichelten Linie das Modul MAR des Arbeitsrings sowie das dazu redundante Modul MARr des Arbeitsrings und unterhalb dieser Linie das Modul MPR des Überwachungsrings sowie das dazu redundante Modul MPRr des Überwachungsrings dargestellt. Die auf den Glasfasern des Arbeitsringes ankommenden optischen Signale unterschiedlicher Wellenlänge werden über die Umschalteinrichtung U1 und einen herkömmlichen passiven Verzweiger Sp zum einen dem Demultiplexer des Moduls des Arbeitsrings und zum andern dem Demultiplexer des redundanten Moduls des Arbeitsrings zugeführt. Aus diesen Demultiplexern wird jeweils ein Signal mit der besonderen Wellenlänge ausgekoppelt. Eine herkömmliche Auswahleinrichtung AE1, die ein optisches Signal von einem Wellenleiter auf einen anderen Wellenleiter umzuschalten vermag, führt jeweils Signale mit der besonderen Wellenlänge einem Wellenlängendetektor WD1 zu. Der Wellenlängendetektor WD1 überwacht das Vorhandensein des Signals mit der besonderen Wellenlänge. Für den Fall, daß das Signal mit der besonderen Wellenlänge nicht detektiert werden kann, veranlaßt der Wellenlängendetektor WD1 die Auswahleinrichtung AE1, auf das von dem jeweils anderen Modul ausgekoppelte Signal mit der besonderen Wellenlänge umzuschalten. Ein optisches Signal mit einer anderen Wellenlänge wird entweder sowohl in dem Modul des Arbeitsringes als auch in dem Modul des Überwachungsringes von dem zugehörigen Demultiplexer über die Schalteinrichtungen S7 und S8 bzw. über die Schalteinrichtungen S10 und S11 dem zugehörigen Multiplexer zugeführt oder über die Schalteinrichtung S7 bzw. S10 und die Auswahleinrichtung AE2 zu dem Wellenlängendetektor WD2 aus dem Ringnetz ausgekoppelt. Für den Fall, daß der Wellenlängendetektor WD2 das Signal mit der anderen Wellenlänge nicht detektiert, veranlaßt er die Auswahleinrichtung AE2, auf das von dem jeweils anderen Modul des Arbeitsringes gelieferte Signal umzuschalten. Für den Fall, daß das Signal mit der anderen Wellenlänge aus dem Ringnetz ausgekoppelt wird, kann ein neues Signal mit der anderen Wellenlänge über die Zuführeinrichtung ZE1 entweder via die Schalteinrichtung S8 oder via die Schalteinrichtung S11 in das Ringnetz eingekoppelt werden. Über die Zuführeinrichtung ZE2 wird ein Signal mit der besonderen Wellenlänge über jeweils einen der Multiplexer der Module des Arbeitsringes in das Ringnetz eingekoppelt. Die einander entsprechenden Schalteinrichtungen S7, S10 bzw. S8, S11 in den zueinander redundanten Modulen werden, wie durch gestrichelte Linien angedeutet, gleichsinnig geschaltet. Ein optisches Signal mit einer weiteren Wellenlänge wird entweder in dem Modul des Arbeitsringes oder in dem dazu redundanten Modul des Arbeitsringes von dem zugehörigen Demultiplexer über die Schalteinrichtung 59 bzw. über die Schalteinricht S12 dem zugehörigen Multiplexer zugeführt. Im übrigen sind in jedem Modul der Demultiplexer mit dem zugehörigen Multiplexer, wie für FIG 1 bzw. für FIG 2 beschrieben, verbindbar. Das Modul MPR des Überwachungsrings und das dazu redundante Modul sind prinzipiell gleich aufgebaut wie die Module des Arbeitsringes. Abweichend von den Modulen des Arbeitsringes erfolgt in den Modulen des Überwachungsringes - neben der Herausleitung bzw. der Zuführung eines Signales mit der besonderen Wellenlänge - eine ausschließliche Durchschaltung von Nutzsignalen in den Modulen. In den Modulen des Überwachungsringes sind die zugehörigen Demultiplexer mit den zugehörigen Multiplexern für jede Wellenlänge über einen Tangential-Wellenleiter und eine Schalteinrichtung (S13 ... S16) verbindbar. Die Multiplexer in den einzelnen Modulen führen die ihnen eingangsseitig zugeführten einzelnen optischen Signale zu jeweils einem Gesamtsignal zusammen. Die Multiplexer des Arbeitsringes und des Überwachungsringes sind jeweils über einen Wellenlängendetektor mit einem herkömmlichen Kombinierer KOM verbunden. Der Kombinierer ist über eine Umschalteinrichtung U2 bzw. U4 mit einer optische Signale von dem Ringknoten weiterleitenden Glasfaserleitung verbunden. Die mit den Multiplexern verbundenen Wellenlängendetektoren überwachen jeweils die von dem zugehörigen Modul abgegebenen Wellenlängen und veranlassen beim Ausfall einer bestimmten Wellenlänge die alleinige Durchschaltung dieser Wellenlänge in dem jeweils anderen Modul. Zur alleinigen Durchschaltung werden die einander entsprechenden Schalteinrichtungen, z.B. S9, S12 bzw. S13, S15 bzw. S14, S16, in zueinander redundanten Modulen, wie durch gestrichelte Linien angedeutet, gegengleich geschaltet.

Die Rekonfiguration eines Ringnetzes mit Ringknoten nach FIG 4 bei Unterbrechung der Glasfaserleitungen zwischen zwei benachbarten Ringknoten erfolgt entsprechend der für FIG 3 beschriebenen Weise. Abweichend hiervon wird erst dann von einer Unterbrechung der betreffenden Glasfaserleitung ausgegangen, wenn der zugehörige Wellenlängendetektor WD1 bzw. WD3 über keine der beiden Schaltstellungen der zugehörigen Auswahleinrichtung AE1 bzw. AE3 ein Signal mit der besonderen Wellenlänge empfängt.

Die Erfindung wurde insoweit lediglich am Beispiel eines unidirektionalen Ringnetzes beschrieben, worauf sie jedoch nicht beschränkt ist. Eine Weiterbildung ist durch ein bidirektionales Ringnetz gegeben, das zwei Arbeitsringe mit gegenläufiger Übertragungsrichtung und zugehörige Überwachungsringe mit gegenläufigen Übertragungsrichtungen aufweist. Bei einem bidirektionalen Ringnetz mit weils einem Arbeitsring und einem zugehörigen, eine gegenläufige Übertragungsrichtung aufweisenden Überwachungsring kommen die für ein unidirektionales Ringnetz beschriebenen Maßnahmen sinngemäß zur Anwendung.

## Patentansprüche

1. Optisches Ringnetz mit einer Mehrzahl von Ringknoten, bei dem
- jeweils benachbarte Ringknoten (RK) über eine optische Signale mit unterschiedlichen Wellenlängen führende Glasfaserleitung (GL) für eine Übertragungsrichtung verbunden sind,
- die Ringknoten mit jeweils ein optisches Signal mit einer einzigen Wellenlänge an das Ringnetz zuführenden Wellenleitern (RWLZ) bzw. von dem Ringnetz weiterleitenden Wellenleitern (RWLW) verbunden sind,
- jeder Ringknoten einen Demultiplexer (DEMUX) aufweist, der eingangsseitig mit der optische Signale heranführenden Glasfaserleitung und ausgangsseitig mit jeweils ein optisches Signal einer einzigen Wellenlänge führenden Wellenleitern (TWL) verbunden ist,
- jeder Ringknoten einen Multiplexer (MUX) aufweist, der ausgangsseitig mit der optische Signale weiterleitenden Glasfaserleitung und eingangsseitig mit jeweils ein optisches Signal einer einzigen Wellenlänge führenden Wellenleitern verbunden ist,
**dadurch gekennzeichnet, dass**
- der Demultiplexer über einen eine einzige Wellenlänge führenden Wellenleiter sowohl mit einem ein optisches Signal weiterleitenden Wellenleiter (RWLW) als auch mit dem Multiplexer verbindbar ist und
- ein mit dem Multiplexer verbundener Wellenleiter über eine Schalteinrichtung (S) wahlweise mit dem Demultiplexer oder mit einem ein optisches Signal dem Ringnetz zuführenden Wellenleiter (RWLZ) verbindbar ist.

2. Ringnetz nach Anspruch 1,
**dadurch gekennzeichnet,**
**daß** ein Wellenleiter nur mit dem Demultiplexer und dem Multiplexer verbunden ist.

3. Ringnetz nach Anspruch 1 oder 2,
**dadurch gekennzeichnet,**
**daß** der Demultiplexer ausgangsseitig mit einen ein Signal mit einer einzigen Wellenlänge von dem Ringnetz weiterleitenden Wellenleiter (SbW) verbunden ist.

4. Ringnetz nach einem der vorstehenden Ansprüche,
**dadurch gekennzeichnet,**
**daß** der Multiplexer eingangsseitig mit einem ein Signal mit einer einzigen Wellenlänge dem Ringnetz zuführenden Wellenleiter verbunden ist.

5. Ringnetz nach einem der Ansprüche 3 oder 4,
**dadurch gekennzeichnet,**
**daß** der Demultiplexer und der Multiplexer jeweils mit einem ein Signal mit der besonderen Wellenlänge führenden Wellenleiter verbunden sind.

6. Verfahren zum Betrieb eines Optischen Ringnetzes mit einer Mehrzahl von Ringknoten, bei dem
- jeweils benachbarte Ringknoten (RK) über eine optische Signale mit unterschiedlichen, insbesondere erste, zweite und dritte, Wellenlängen führende Glasfaserleitung (GL) für eine Übertragungsrichtung verbunden sind,
- die Ringknoten mit jeweils ein optisches Signal mit einer einzigen Wellenlänge an das Ringnetz zuführenden Wellenleitern (RWLZ) bzw. von dem Ringnetz weiterleitenden Wellenleitern (RWLW) verbunden sind,
- jeder Ringknoten einen Demultiplexer (DEMUX) aufweist, der eingangsseitig mit der optische Signale heranführenden Glasfaserleitung und ausgangsseitig mit jeweils ein optisches Signal einer einzigen Wellenlänge führenden Wellenleitern (TWL) verbunden ist,
- jeder Ringknoten einen Multiplexer (MUX) aufweist, der ausgangsseitig mit der optische Signale weiterleitenden Glasfaserleitung und eingangsseitig mit jeweils ein optisches Signal einer einzigen Wellenlänge führenden Wellenleitern verbunden ist,
- der Demultiplexer über einen eine einzige Wellenlänge führenden Wellenleiter sowohl mit einem ein optisches Signal weiterleitenden Wellenleiter als auch mit dem Multiplexer verbindbar ist und
- ein mit dem Multiplexer verbundener Wellenleiter über eine Schalteinrichtung (S) wahlweise mit dem Demultiplexer oder mit einem ein optisches Signal dem Ringnetz zuführenden Wellenleiter (RWLZ) verbindbar ist,
wodurch
ein Signal mit der ersten Wellenlänge vom Demultiplexer zum Multiplexer durchgeschaltet wird.

7. Verfahren zum Betrieb eines Optischen Ringnetzes, mit einer Mehrzahl von Ringknoten, insbesondere nach Anspruch 6, bei dem
- jeweils benachbarte Ringknoten (RK) über eine optische Signale mit unterschiedlichen, insbesondere erste, zweite und dritte, Wellenlängen führende Glasfaserleitung (GL) für eine Übertragungsrichtung verbunden sind,
- die Ringknoten mit jeweils ein optisches Signal mit einer einzigen Wellenlänge an das Ringnetz zuführenden Wellenleitern (RWLZ) bzw. von dem Ringnetz weiterleitenden Wellenleitern (RWLW) verbunden sind,
- jeder Ringknoten einen Demultiplexer (DEMUX) aufweist, der eingangsseitig mit der optische Signale heranführenden Glasfaserleitung und ausgangsseitig mit jeweils ein optisches Signal einer einzigen Wellenlänge führenden Wellenleitern (TWL)-verbunden ist,
- jeder Ringknoten einen Multiplexer (MUX) aufweist, der ausgangsseitig mit der optische Signale weiterleitenden Glasfaserleitung und eingangsseitig mit jeweils ein optisches Signal einer einzigen Wellenlänge führenden Wellenleitern verbunden ist,
- der Demultiplexer über einen eine einzige Wellenlänge führenden Wellenleiter sowohl mit einem ein optisches Signal weiterleitenden Wellenleiter als auch mit dem Multiplexer verbindbar ist
- ein mit dem Multiplexer verbundener Wellenleiter über eine Schalteinrichtung (S) wahlweise mit dem Demultiplexer oder mit einem ein optisches Signal dem Ringnetz zuführenden Wellenleiter (RWLZ) verbindbar ist,
wodurch
ein Signal mit der zweiten Wellenlänge vom Demultiplexer sowohl zum Multiplexer durchgeschaltet als auch aus dem Ringnetz weitergeleitet wird.

8. Verfahren zum Betrieb eines Optischen Ringnetzes mit einer Mehrzahl von Ringknoten, insbesondere nach einem der Ansprüche 6 oder 7, bei dem
- jeweils benachbarte Ringknoten (RK) über eine optische Signale mit unterschiedlichen, insbesondere erste, zweite und dritte, Wellenlängen führende Glasfaserleitung (GL) für eine Übertragungsrichtung verbunden sind,
- die Ringknoten mit jeweils ein optisches Signal mit einer einzigen Wellenlänge an das Ringnetz zuführenden Wellenleitern (RWLZ) bzw. von dem Ringnetz weiterleitenden Wellenleitern (RWLW) verbunden sind,
- jeder Ringknoten einen Demultiplexer (DEMUX) aufweist, der eingangsseitig mit der optische Signale heranführenden Glasfaserleitung und ausgangsseitig mit jeweils ein optisches Signal einer einzigen Wellenlänge führenden Wellenleitern (TWL) verbunden ist,
- jeder Ringknoten einen Multiplexer (MUX) aufweist, der ausgangsseitig mit der optische Signale weiterleitenden Glasfaserleitung und eingangsseitig mit jeweils ein optisches Signal einer einzigen Wellenlänge führenden Wellenleitern verbunden ist,
- der Demultiplexer über einen eine einzige Wellenlänge führenden Wellenleiter sowohl mit einem ein optisches Signal weiterleitenden Wellenleiter als auch mit dem Multiplexer verbindbar ist
- ein mit dem Multiplexer verbundener Wellenleiter über eine Schalteinrichtung (S) wahlweise mit dem Demultiplexer oder mit einem ein optisches Signal dem Ringnetz zuführenden Wellenleiter (RWLZ) verbindbar ist,
wodurch
ein Signal mit der dritten Wellenlänge aus dem Ringnetz weitergeleitet wird.

9. Verfahren zum Betrieb eines Ringnetzes nach einem der Ansprüche 6, 7 oder 8,
wobei
ein Signal mit der dritten Wellenlänge dem Ringnetz zugeführt wird.

10. Verfahren zum Betrieb eines Ringnetzes nach einem der Ansprüche 6 bis 9,
wobei
in einem Ringknoten ein Signal mit einer besonderen Wellenlänge (SbW) aus dem Ringnetz ausgekoppelt und ein Signal mit der besonderen Wellenlänge (SbW) dem Ringnetz zugeführt wird.

11. Verfahren zum Betrieb eines Ringnetzes nach Anspruch 10,
wobei
der Ringknoten nach Maßgabe des Signals mit der besonderen Wellenlänge steuerbar und/oder überwachbar ist.

## Claims

1. Optical ring network with a plurality of ring nodes, in which
- adjacent ring nodes (RK) are connected in each case via a glass fiber line (GL) carrying optical signals with different wavelengths for one direction of transmission,
- the ring nodes are connected to waveguides (RWLZ) feeding an optical signal with a single wavelength to the ring network in each case or to waveguides (RWLW) forwarding signals from the ring network in each case,
- each ring node features a demultiplexer (DEMUX) which is connected on its input side to the glass fiber line feeding in the optical signals and on its output side to waveguides (TWL) each carrying an optical signal of a single wavelength,
- each ring node features a multiplexer (MUX) which is connected on its output side with the glass fiber line forwarding the optical signals and on its input side with waveguides each carrying an optical signal of an single wavelength.
**characterized in that**
- the demultiplexer is connected via a waveguide carrying a single wavelength both to a waveguide forwarding an optical signal (RWLW) and also to the multiplexer, and
- a waveguide connected to the multiplexer is connected via a switching device (S) to either the demultiplexer or to a waveguide feeding in an optical signal to the ring network (RWLZ).

2. Ring network in accordance with Claim 1,
**characterized in that**
a waveguide is only connected to the demultiplexer and the multiplexer.

3. Ring network in accordance with Claim 1 or 2,
**characterized in that**
the demultiplexer is connected on its output side with a waveguide (SbW) carrying a signal with a single wavelength onwards from the ring network.

4. Ring network in accordance with one of the previous claims,
**characterized in that**,
the multiplexer is connected on its input side with a waveguide carrying a signal with a single wavelength to the ring network.

5. Ring network in accordance with one of the Claims 3 or 4,
**characterized in that**
the demultiplexer and the multiplexer are each connected to a waveguide carrying a signal with the particular wavelength.

6. Method for operating an optical ring network with a plurality of ring nodes, in which
- adjacent ring nodes (RK) are connected in each case via a glass fiber line carrying an optical signal with different, especially, first, second and third wavelengths, for a transmission direction,
- the ring nodes are connected to waveguides (RWLZ) feeding in an optical signal with a single wavelength to the ring network in each case or to waveguides (RWLW) feeding out signals from the ring network in each case,
- each ring node features a demultiplexer (DEMUX) which is connected on its input side to the glass-fiber line feeding in the optical signals and on its output side to waveguides (TWL) each carrying an optical signal of a single wavelength,
- each ring node features a multiplexer (MUX) which is connected on its output side with the glass fiber line feeding out the optical signals and on its input side with waveguides each carrying an optical signal of a single wavelength.
- the demultiplexer can be connected both to a waveguide carrying a single wavelength and also to a waveguide feeding out an optical signal and also to the multiplexer, and
- a waveguide connected to the multiplexer is connected via a switching device (S) to either the demultiplexer or to a waveguide (RWLZ) feeding in an optical signal to the ring network.
where
a signal with the first wavelength is switched through from demultiplexer to multiplexer.

7. Method for operating an optical ring network with a plurality of ring nodes, especially in accordance with Claim 6, in which
- adjacent ring nodes (RK) are connected in each case via a glass fiber line (GL) feeding in optical signals with different, especially first, second and third wavelengths, for one direction of transmission,
- the ring nodes are connected to waveguides (RWLZ) feeding in an optical signal with a single wavelength to the ring network in each case or to waveguides (RWLW) feeding out signals from the ring network in each case,
- each ring node features a demultiplexer (DEMUX) which is connected on its input side to the glass-fiber line feeding in the optical signals and on its output side to waveguides (TWL) each carrying an optical signal of a single wavelength,
- each ring node features a multiplexer (MUX) which is connected on its output side with the glass fiber line feeding out the optical signals and on its input side with waveguides each carrying an optical signal of a single wavelength.
- the demultiplexer can be connected via a waveguide carrying a single wavelength both to a waveguide forwarding an optical signal (RWLW) and also to the multiplexer
- a waveguide connected to the multiplexer is connected via a switching device (S) to either the demultiplexer or to a waveguide (RWLZ) feeding in an optical signal to the ring network.
where
a signal with the second wavelength is both switched through from the demultiplexer to the multiplexer and also forwarded from the ring network.

8. Method for operating an optical ring network with a plurality of ring nodes, especially in accordance with one of the Claims 6 or 7, in which
- adjacent ring nodes (RK) are connected in each case via a glass fiber line (GL) carrying optical signals with different wavelengths for one direction of transmission,
- the ring nodes are connected to waveguides (RWLZ) feeding in an optical signal with a single wavelength to the ring network in each case or to waveguides (RWLW) feeding out signals from the ring network in each case,
- each ring node features a demultiplexer (DEMUX) which is connected on its input side to the glass-fiber line feeding in the optical signals and on its output side to waveguides (TWL) each carrying an optical signal of a single wavelength,
- each ring node features a multiplexer (MUX) which is connected on its output side with the glass fiber line feeding out the optical signals and on its input side with waveguides each carrying an optical signal of a single wavelength.
- the demultiplexer can be connected via a waveguide carrying a single wavelength both to a waveguide forwarding an optical signal (RWLW) and also to the multiplexer
- a waveguide connected to the multiplexer is connected via a switching device (S) to either the demultiplexer or to a waveguide (RWLZ) feeding in an optical signal to the ring network.
where
a signal with the third wavelength is forwarded from the ring network.

9. Method for operating a ring network in accordance with one of the Claims 6, 7 or 8,
where
a signal with the third wavelength is fed into the ring network.

10. Method for operating a ring network in accordance with one of the Claims 6 to 9,
where
in a ring node a signal with a particular wavelength (SbW) is extracted from the ring network and a signal with the particular wavelength (SbW) is fed to the ring network.

11. Method for operating a ring network in accordance with Claim 10,
where
the ring node can be controlled and/or monitored in accordance with the signal with the particular wavelength.

## Revendications

1. Réseau en anneau optique comportant une pluralité de noeuds de l'anneau, sur lequel
- des noeuds de l'anneau (RK) respectivement voisins sont reliés au moyen d'une ligne en fibre de verre (GL) véhiculant des signaux optiques de longueurs d'onde différentes pour un sens de transmission,
- les noeuds de l'anneau sont reliés à des guides d'ondes (RWLZ) amenant respectivement un signal optique d'une seule longueur d'onde au réseau en anneau resp. à des guides d'ondes (RWLW) transmettant à partir du réseau en anneau,
- chaque noeud de l'anneau présente un démultiplexeur (DEMUX), qui est relié côté entrée à la ligne en fibre de verre amenant des signaux optiques et côté sortie à des guides d'ondes (TWL) véhiculant respectivement un signal optique d'une seule longueur d'onde,
- chaque noeud de l'anneau présente un multiplexeur (MUX), qui est relié côté sortie à la ligne en fibre de verre transmettant des signaux optiques et côté entrée à des guides d'ondes véhiculant respectivement un signal optique d'une seule longueur d'onde,
**caractérisé en ce que**
- le démultiplexeur peut être relié au moyen d'un guide d'ondes véhiculant une seule longueur d'onde aussi bien à un guide d'ondes (RWLW) transmettant un signal optique qu'au multiplexeur, et
- un guide d'ondes relié au multiplexeur peut être relié au moyen d'un dispositif de commutation (S) au choix au démultiplexeur ou à un guide d'ondes (RWLZ) amenant un signal optique au réseau en anneau.

2. Réseau en anneau selon la revendication 1,
**caractérisé en ce que**
un guide d'ondes est relié seulement au démultiplexeur et au multiplexeur.

3. Réseau en anneau selon la revendication 1 ou 2,
**caractérisé en ce que**
le démultiplexeur est relié côté sortie à un guide d'ondes (SBW) transmettant un signal d'une seule longueur d'onde à partir du réseau en anneau.

4. Réseau en anneau selon l'une quelconque des revendications précédentes,
**caractérisé en ce que**
le multiplexeur est relié côté entrée à un guide d'ondes amenant un signal d'une seule longueur d'onde au réseau en anneau.

5. Réseau en anneau selon l'une quelconque des revendications 3 ou 4,
**caractérisé en ce que**
le démultiplexeur et le multiplexeur sont reliés respectivement à un guide d'ondes véhiculant un signal de la longueur d'onde particulière.

6. Procédé pour l'exploitation d'un réseau optique en anneau avec une pluralité de noeuds de l'anneau, dans lequel
- des noeuds de l'anneau (RK) respectivement voisins sont reliés au moyen d'une ligne en fibre de verre (GL) véhiculant des signaux optiques de différentes longueurs d'onde, en particulier des premières, secondes ou troisièmes longueurs d'onde pour un sens de transmission,
- les noeuds de l'anneau sont reliés à des guides d'ondes (RWLZ) amenant respectivement un signal optique d'une seule longueur d'onde au réseau en anneau resp. sont reliés à des guides d'ondes (RWLW) transmettant à partir du réseau en anneau,
- chaque noeud de l'anneau présente un démultiplexeur (DEMUX), qui est relié côté entrée à la ligne en fibre de verre amenant des signaux optiques et côté sortie à des guides d'ondes (TWL) véhiculant respectivement un signal optique d'une seule longueur d'onde,
- chaque noeud de l'anneau présente un multiplexeur (MUX), qui est relié côté sortie à la ligne en fibre de verre transmettant des signaux optiques et côté entrée à des guides d'ondes véhiculant respectivement un signal optique d'une seule longueur d'onde,
- le démultiplexeur peut être relié au moyen d'un guide d'ondes véhiculant une seule longueur d'onde aussi bien à un guide d'ondes transmettant un signal optique qu'au multiplexeur et
- un guide d'ondes relié au multiplexeur peut être relié au moyen d'un dispositif de commutation (S) au choix au démultiplexeur ou bien à un guide d'ondes (RWLZ) amenant un signal optique au réseau en anneau,
un signal de la première longueur d'onde étant commuté du démultiplexeur au multiplexeur.

7. Procédé pour l'exploitation d'un réseau en anneau optique, avec une pluralité de noeuds de l'anneau, en particulier selon la revendication 6,
dans lequel
- des noeuds de l'anneau (RK) respectivement voisins sont reliés au moyen d'une ligne en fibre de verre (GL), véhiculant des signaux optiques de différentes longueurs d'onde, en particulier les premières, secondes et troisièmes longueurs d'onde pour un sens de transmission,
- les noeuds de l'anneau sont reliés à des guides d'ondes (RWLZ) amenant respectivement un signal optique d'une seule longueur d'onde au réseau en anneau resp. à des guides d'ondes (RWLW) transmettant à partir du réseau en anneau,
- chaque noeud de l'anneau présente un démultiplexeur (DEMUX), qui est relié côté entrée à la ligne en fibre de verre amenant des signaux optiques, et côté sortie à des guides d'ondes (TWL) véhiculant respectivement un signal optique d'une seule longueur d'onde.
- chaque noeud de l'anneau présente un multiplexeur (MUX), qui est relié côté sortie à la ligne en fibre de verre transmettant des signaux optiques et côté entrée à des guides d'ondes véhiculant respectivement un signal optique d'une seule longueur d'onde,
- le démultiplexeur peut être relié au moyen d'un guide d'ondes véhiculant une seule longueur d'onde aussi bien à un guide d'ondes transmettant un signal optique qu'au multiplexeur,
- un guide d'ondes relié au multiplexeur peut être relié au moyen d'un dispositif de commutation (S) au choix au démultiplexeur ou à un guide d'ondes (RWLZ) amenant un signal optique au réseau en anneau,
un signal de la seconde longueur d'onde venant du démultiplexeur étant commuté aussi bien vers le multiplexeur que transmis à partir du réseau en anneau.

8. Procédé pour l'exploitation d'un réseau en anneau optique avec une pluralité de noeuds de l'anneau, en particulier selon l'une quelconque des revendications 6 ou 7, dans lequel
- des noeuds de l'anneau (RK) respectivement voisins sont reliés au moyen d'une ligne en fibre de verre (GL) véhiculant des signaux optiques de différentes longueurs d'onde, en particulier les premières, secondes et troisièmes longueurs d'onde, pour un sens de transmission,
- les noeuds de l'anneau sont reliés à des guides d'ondes (RWLZ) amenant respectivement un signal optique d'une seule longueur d'onde au réseau en anneau resp. à des guides d'ondes (RWLW) transmettant à partir du réseau en anneau,
- chaque noeud de l'anneau présente un démultiplexeur (DEMUX), qui est relié côté entrée à la ligne en fibre de verre amenant des signaux optiques et côté sortie à des guides d'ondes (TWL) véhiculant respectivement un signal optique d'une seule longueur d'onde,
- chaque noeud de l'anneau présente un multiplexeur (MUX) qui est relié côté sortie à la ligne en fibre de verre transmettant des signaux optiques et côté entrée à des guides d'ondes véhiculant respectivement un signal optique d'une seule longueur d'onde,
- le démultiplexeur peut être relié au moyen d'un guide d'ondes véhiculant une seule longueur d'onde aussi bien à un guide d'ondes transmettant un signal optique qu'au multiplexeur,
- un guide d'ondes relié au multiplexeur peut être relié au moyen d'un dispositif de commutation (S) au choix au démultiplexeur ou à un guide d'ondes (RWLZ) amenant un signal optique au réseau en anneau,
un signal de la troisième longueur d'onde étant transmis à partir du réseau en anneau.

9. Procédé pour l'exploitation d'un réseau en anneau selon l'une quelconque des revendications 6, 7 ou 8,
un signal de la troisième longueur d'onde étant amené au réseau en anneau.

10. Procédé pour l'exploitation d'un réseau en anneau selon l'une quelconque des revendications 6 à 9,
dans un noeud de l'anneau, un signal d'une longueur d'onde particulière (SbW) étant déclenché du réseau en anneau et un signal de la longueur d'onde particulière (SbW) étant amené au réseau en anneau.

11. Procédé pour l'exploitation d'un réseau en anneau selon la revendication 10,
le noeud de l'anneau pouvant être commandé et/ou contrôlé en raison du signal de la longueur d'onde particulière.
